# EUROPEAN PATENT SPECIFICATION

(11) **EP 0 555 219 B1**
(45) Date of publication and mention of the grant of the patent: **26.06.2002**
(21) Application number: 91911098.1
(22) Date of filing: 30.04.1991
(51) Int. Cl.: H04K 1/00, G07F 7/10

(54) **METHOD AND APPARATUS FOR PERSONAL IDENTIFICATION**
VERFAHREN UND EINRICHTUNG ZUR PERSONENIDENTIFIKATION
PROCEDE ET APPAREIL D'IDENTIFICATION DE PERSONNES

(30) Priority: 19.10.1990 US 597784; 18.03.1991 US 670705
(43) Date of publication of application: 18.08.1993
(73) Proprietor: RSA Security Inc., Bedford, MA 01730 (US)
(72) Inventor: WEISS, Kenneth, P., Newton, MA 02159 (US)
(74) Representative: Manitz, Finsterwald & Partner
(86) International application number: US9103034
(87) International publication number: WO9207436

(56) References cited:
- DE-A- 3 222 288
- US-A- 4 215 421
- US-A- 4 509 093
- US-A- 4 578 530
- US-A- 4 599 489
- US-A- 4 720 860
- US-A- 4 731 841
- US-A- 4 802 216
- US-A- 4 819 267
- US-A- 4 856 062
- US-A- 4 885 778
- US-A- 4 890 323

## Description

### Field of the Invention

This invention relates to methods and systems for identifying an individual and more particularly to methods and systems for providing improved security for a personal identification number (PIN) utilized in conjunction with such an identification system.

### Background of the Invention

Personal identification systems may be based on something someone has, such as a card or badge, something that someone knows, such as a PIN, or some characteristic of the individual, such as his fingerprints or speech pattern. Security for such systems is enhanced by utilizing two or more of the above in performing the identification.

For example, parent U.S. Patent No. 4,720,860, discloses a personal identification system wherein the individual has a card or other small, portable device which contains a microprocessor programmed to utilize a secret algorithm to generate a nonpredictable number from a stored value unique to the individual and a time varying value provided for example by a clock. The nonpredictable value is preferably displayed on the device. The individual then enters his secret PIN into a central verification system, either directly or over a telephone line, causing the central system to access stored information corresponding to the individual and to utilize at least some of this information to generate a nonpredictable value at the central computer utilizing the same algorithm as at the individual's microprocessor. At the same time this is being done, the individual is entering the number appearing at that period of time on the display of his device. The two values will match, signifying identification of the individual, only if the individual has entered the correct PIN and if the individual has the proper device so that the nonpredictable code displayed corresponds to that being generated at the central verification computer.

In other systems, such as those shown in U.S. Patent No. 4,599,489 issued July 8, 1986, the PIN may either be stored in the user's device, or may be entered by the user. If the PIN is stored in the device, it is read from the device by a suitable reader and causes the central verification computer to generate a unique challenge code to the individual. This challenge code may either be entered by the individual into his machine, or may be automatically sensed by the machine, and is operated on by the user's device to generate a unique. nonpredictable code which is then entered into the central computer to effect verification.

One potential difficulty with either of the systems indicated above is that an unauthorized individual may be able to obtain access to the user's PIN by electronic eavesdropping, reducing the security provided by the system. If, for example, the PIN is transmitted over public lines, such as telephone lines, from the user to the central verification computer, it may be possible to tap these lines and intercept the PIN as it is being transmitted. If the PIN is stored in the device, someone obtaining the device surreptitiously may, through sophisticated means, be able to determine the PIN stored in the device and thus defeat the security of the system. Furthermore, any storing of a PIN or password in the portable device for comparison defeats the purpose of an independent identification factor and reduces security to a "thing" possessed.

A need therefore exists for an improved means of communicating a PIN or other user identification code to a central verification system such that someone tapping the line over which the code is being sent will be unable to determine the secret identification number and someone obtaining possession of the user device will also not be able to obtain access to the user's secret identification number from the device.

The Japanese Patent Publication No. 3-34707, issued May 23, 1991, on which the preamble of claim 1 is based, relates to a personal identification system having an improved means of communicating a PIN or user password. In this case a transmitter encrypts key data by combining the password and time data using a function number, and then transmits this key data along with the member or user number to a receiver which then carries out the verification process.

However, it would be helpful to speed up and efficiently complete the whole verification process. Thus, it was the object of the invention to achieve a more efficient and faster method of carrying out the whole verification process.

### Summary of the Invention

In accordance with the above, this invention provides a system for personal identification according to independent claim 1, and a method for use with the system according to independent claim 22.

The device in the possession of the individual is utilized to generate a unique, time varying, nonpredictable code; the nonpredictable code generated at a given time is mixed with a secret PIN for the individual; the mixed output is communicated to the central verification computer; and the verification computer typically strips the PIN from the communicated value and utilizes the stripped PIN and remaining nonpredictable code to perform a verification operation. Alternatively and equivalently, the mixed output which is communicated to the verification computer may be verified in the verification computer without stripping of the PIN. Preferably, before the mixed value is communicated to the verification computer, a nonsecret identifying code for the individual is communicated to the verification computer; the verification computer utilizes the nonsecret identifying code to obtain the PIN and appropriate nonpredictable code for the individual; and the verification operation includes the PIN and appropriate nonpredictable code for the individual; and the verification operation includes the PIN and appropriate nonpredictable code obtained during the obtaining step being compared with the stripped PIN and remaining nonpredictable code. Alternatively the PIN may not be stripped from the mixed value, the verification computer may utilize the nonsecret identifying code to retrieve or obtain the PIN and appropriate nonpredictable code, combine the retrieved PIN and appropriate nonpredictable code, and perform a verification operation between the mixed value communicated to the verification computer and the combination of the retrieved PIN and appropriate nonpredictable code. The verification computer may also generate a unique challenge value in response to the nonsecret identifying code which challenge code is communicated to the device in possession of the individual. For one embodiment, the challenge code is communicated to the individual and the individual inputs the challenge value and the PIN to his device, the device includes means responsive to the challenge value for generating the nonpredictable code. During the mixing step, the device may receive the PIN and the nonpredictable code and generate an output which is a predetermined function of the inputs. The predetermined function may, for example, be a sum of the inputs, for example the sum of the inputs without carry.

Further aspects of the invention are set out in the dependent claims.

The foregoing and other objects, features and advantages of the invention will be apparent from the following more particular description of preferred embodiments of the invention as illustrated in the accompanying drawings.

### In the Drawings

Fig. 1 is a semi-block schematic diagram of the verification system of a first embodiment of the invention.

Fig. 2 is a block schematic diagram of a second embodiment of the invention.

Fig. 3 is a block flow diagram illustrating the operation of the first embodiment of the invention and alternative steps for the second embodiment of the invention.

### Detailed Description

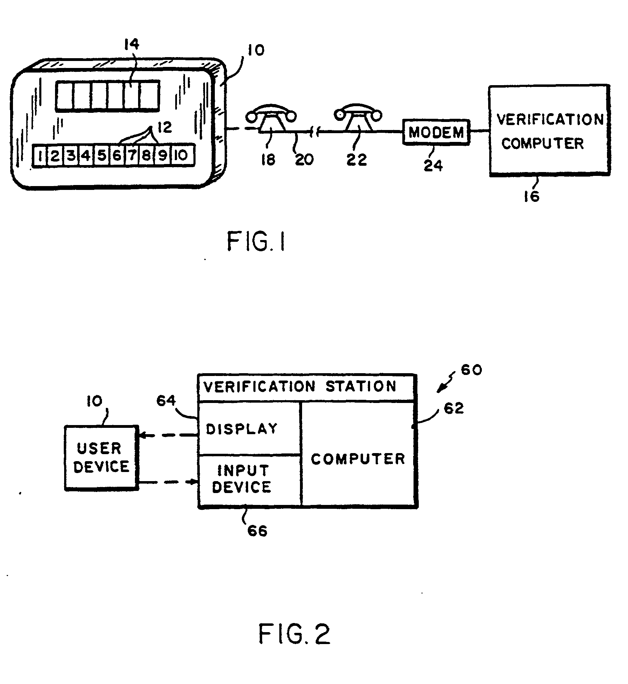

Fig. 1 shows illustrative structure for a personal identification system of a first embodiment of the invention. In this figure, a user verification device 10 is provided which is of the type described in the parent applications. The device is preferably of the general size and shape of a standard credit card, although its thickness dimension may be slightly greater than that of such cards. The device 10 has a clock which generates a time-dependent digital output to a microprocessor which is programmed with a unique algorithm to operate on the time-dependent clock input and on a stored static value unique to a given user to generate a multi-bit nonpredictable code. A plurality of input areas 12 are provided on the face of device 10. These areas are preferably each indicative of a numerical digit, for example the digits 1 - 0 as shown in Fig. 1, and may be pressure-sensitive pads or otherwise adapted to generate an electrical output indicative of the area when the area is touched by the user. Spacing may be provided between the individual areas 12 to assure distinctive outputs. As will be described in greater detail hereinafter, the user may input his unique PIN on areas 12 which are mixed in the processor in device 10 with the nonpredictable code generated therein in response to the time-dependent and static inputs to generate a multi-bit nonpredictable code which is displayed on area 14 of device 10. Area 14 may be a liquid crystal display or other suitable display device for producing numeric or alpha-numeric characters. Each area of display 14 is adapted to display a different digit of the nonpredictable code.

The user initially transmits a nonsecret identifying code to verification computer 16 by keying this number into a telephone 18 at his location. This number is transmitted over telephone lines 20 to telephone 22 at the verification station and through a modem 24 at this station to the verification computer. The user may then use the telephone 18 to key in and transmit the nonpredictable code being displayed at that time on display 14.

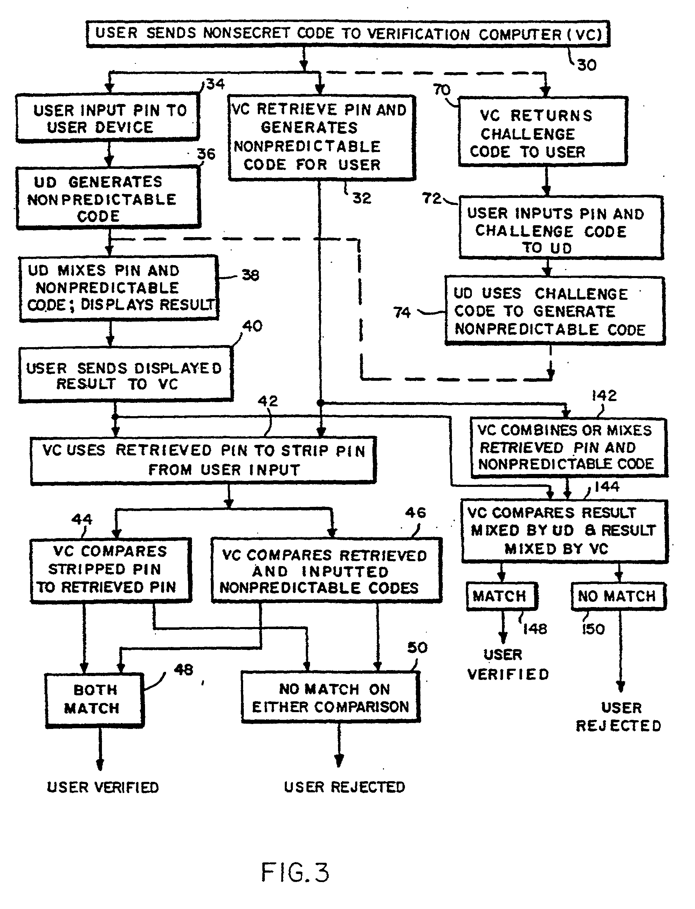

Fig. 3 is a flow diagram illustrating in greater detail the operation of the system of Fig. 1 to perform a verification operation. Referring to Fig. 3, the first step in the operation, step 30, is for the user to send his nonsecret code to verification computer (VC) 16. As previously indicated, this is accomplished by the user keying his nonsecret identification number into telephone 18 for transmission through telephone line 20, telephone 22 and modem 24 to the verification computer.

In response to the user input of his nonsecret code, the verification computer retrieves the user's PIN and generates the nonpredictable code for the user, using the same algorithm and stored static value as user device 10, and using a time-related value from a clock device at the verification computer, which is maintained in synchronism with the clock at the user device in a manner discussed in the parent application (step 32). At the same time that the verification computer is retrieving the PIN and nonpredictable code for the user, the user is inputting his PIN into his device 10 using key pads or areas 12 (step 34). While the user is inputting his pin, the user device is continuously generating nonpredictable code values at its internal processor in response to the clock value and the stored static value using the unique algorithm at the user device processor (step 36).

The next step in the operation, step 38, is for the generated nonpredictable code and the inputted pin to be mixed by the processor in device 10 to generate a new nonpredictable code which is displayed on display 14. The mixing operation may be a simple addition of the two values without carry, or with carry, (a constant added to a pseudo random number produces a pseudo random number) or may involve a more sophisticated mixing algorithm.

During step 40, the user transmits the displayed value by use of telephone 18 through telephone line 20, telephone 22, and modem 24 to verification computer 16.

During the next step in the operation, step 42, the verification computer uses the PIN for the user which was retrieved during step 32 to strip the PIN from the inputted nonpredictable code, the result being a PIN value and a nonpredictable code value. During step 44 the stripped PIN is compared with the PIN retrieved during step 32 and during step 46 the nonpredictable code remaining after the inputted value has the PIN stripped therefrom is compared with the retrieved nonpredictable code. If matches are obtained during both steps 44 and 46 (step 48) the verification computer signifies verification. If a match is not found during either step 44 or step 46 (step 50) then the user is rejected.

Alternatively to steps 42, 44, 46, 48 and 50, the PIN and nonpredictable code which are retrieved in step 32 may be combined or mixed by the verification computer during step 142 according to the same mixing operation which was carried out by the processor or user device 10 in step 38, e.g. by a simple addition of the two values without carry, with carry, or according to some other more sophisticated algorithm. During alternative step 144 the separate results of the mixing operations carried out by the user device 10 and the verification computer 16 are compared. If a match is obtained, step 148, the user is verified. If a match is not found, step 150, the user is rejected.

A procedure is thus provided wherein user verification may be obtained using the simple and inexpensive procedure disclosed in the parent applications while still providing a high level of security for the user PIN. This security is achieved since the user PIN is never available on an open line which could be tapped except in the form of a word which is a mixture of the PIN with a nonpredictable code and which is virtually impossible to decipher.

Fig. 2 illustrates an alternative configuration in which the teachings of this invention may be utilized. In Fig. 2, the user device 10 is of the same type shown in Fig. 1. However, for this embodiment of the invention, the user device is adapted to be used in proximity to the verification station rather than from a remote location over telephone lines. For this embodiment of the invention, the verification station 60 includes a computer 62, a display 64, such as for example a CRT display, and an input device 66 which may, for example, be a standard computer input keyboard. Referring again to Fig. 3, the operation with this embodiment of the invention starts with step 30, during which the user sends a nonsecret code to the verification computer 62 by, for example, keying this code into input device 66. In response to receiving the nonsecret code, computer 60 retrieves the PIN and generates the nonpredictable code for the user (step 32) and also retrieves a challenge code for the user which is displayed on display 64 (step 70). The user inputs his PIN and the challenge code in an order established for the system to user device 10 using input pads 12 (step 72). During step 74, the processor in device 10 uses the inputted challenge code and the time inputted from its clock to generate a nonpredictable code which, during step 38, is mixed with the inputted pin and the results are displayed on display 14 of device 10. From this point on, the operation for this embodiment of the invention is the same as that previously described with respect to the embodiment of Fig. 1.

Thus, with this embodiment of the invention, as with the prior embodiment of the invention, the pin in uncoded form is never transmitted in a manner such that it could be observed and is not resident in the user's device where it might, using sophisticated technology, be retrieved.

As an alternative to the embodiment shown in Fig. 2, the nonsecret code may be recorded in machine-readable form on device 10 and input device 66 might include a card reader which the card is inserted into to permit the nonsecret code to be read into computer 62.

While the invention has been shown and described above with reference to preferred embodiments, the foregoing and other changes in form and detail may be made therein by one skilled in the art without departing from the scope of the invention.

## Claims

1. A personal identification system of the type wherein a user is provided with a device (10) generating a unique, time-varying, nonpredictable code, the user being further provided with a nonsecret identifying code and with a secret PIN, the system comprising:
means (38) for mixing the nonpredictable code generated by the device at a given time with the PIN according to a predetermined algorithm to generate a combined coded value;
means (18, 20) for communicating the nonsecret identifying code and the combined coded value to a central verification computer (16); and wherein said central verification computer (16) includes means (32) for utilizing the nonsecret identifying code to retrieve the PIN and for generating an appropriate, unique, time-varying non-predictable code for the user, and at least one of:
(a) a means for utilizing said retrieved PIN, said appropriate non-predictable code and said combined coded value in performing a verification operation; or
(b) a means (42) for stripping the PIN from said combined coded value received from said communicating means, the nonpredictable code remaining after stripping of the PIN and means (44, 46) for utilizing said retrieved PIN and said appropriate nonpredictable code for performing a verification operation,
**characterized in that** said communicating means (18, 20) is adapted to separately communicate said nonsecret identifying code and said combined coded value to said central verification computer; said communicating means being adapted to communicate the nonsecret identifying code to said verification computer prior to the communicating of the combined coded value from the mixing means to said verification computer.

2. The system as claimed in claim 1 wherein said verification computer includes means for utilizing the communicated nonsecret identifying code to retrieve the PIN and to return a unique challenge value for the user; and
means for communicating the challenge value to the device (10).

3. The system as claimed in claim 2 wherein said challenge value communicating means includes means (64) for communicating the challenge value to the user; and
wherein the device (10) includes means (12) for permitting the user to input the challenge value and the PIN to the device.

4. The system as claimed in claim 3 wherein said device includes means responsive to the challenge value for generating the nonpredictable code; and
wherein said mixing means (38) includes means, included as part of the device, for receiving the inputted PIN and the generated nonpredictable code and for generating an output which is a predetermined function of the input.

5. The system as claimed in claim 4 wherein said mixing means is adapted to add the PIN to the nonpredictable code.

6. The system as claimed in claim 1 wherein said device includes means (12) for permitting the user to input the PIN to the device; and
wherein said means (38) for mixing is included as part of said device and is adapted to receive the PIN inputted by the user and the non-predictable code and to generate an output which is a predetermined function of the input.

7. The system as claimed in claim 6 wherein said mixing means is adapted to add the PIN to the nonpredictable code.

8. The system as claimed in claim 1 wherein said verification computer includes a means (142) for mixing said retrieved PIN and said appropriate nonpredictable code generated by the verification computer (16) at a given time according to the predetermined algorithm to generate a second combined coded value.

9. The system as claimed in claim 8 wherein the verification operation comprises comparing the combined coded value with the second combined coded value.

10. The system as claimed in claim 1 wherein the means for performing a verification operation includes means (44, 46) for comparing said retrieved PIN and said appropriate nonpredictable code obtained in response to the nonsecret identifying code with the stripped PIN and remaining nonpredictable code.

11. The system as claimed in claim 1 wherein said communicating means is operative for communicating the non-secret identifying code to said verification computer prior to the completion of the generation of the combined coded value.

12. The system as claimed in claim 1 wherein said communicating means is operative for communicating the non-secret identifying code to said verification computer prior to the user inputting the PIN into the device.

13. The system as claimed in claim 6, wherein said device is generating a nonpredictable code value (36) while the user is inputting the PIN into the device (34).

14. The system as claimed in claim 6 wherein said device initiates generation of a nonpredictable code value (36) prior to the completion of the time period required for the user to input the PIN into the device (34).

15. The system as claimed in claim 1 comprising:
a first means (36) for generating a nonpredictable code wherein a stored static value and a time related value are mixed according to a predetermined first algorithm (36) (32);
a second means (38) for mixing the non-predictable code generated by the first means with a PIN according to a predetermined second algorithm to generate said combined coded value (38) (142).

16. The system as claimed in claim 15, wherein
the device being operative for performing said first and second means;
the device including a means (12) for permitting the user to input a PIN into the device;
the device including a means for obtaining a stored static value and a time related value;
the device being operative for performing the first means by obtaining the stored static value and the time related value for generating the nonpredictable code;
the device being operative for performing the first means by generating nonpredictable code values while the user is inputting the PIN into the device;
the device being operative for performing the second means by obtaining the PIN inputted by the user for generating said combined coded value (38);

17. The system as claimed in claim 15, where
the verification computer being operative for performing the first and the second means;
and where
the verification computer being operative for performing the first means by utilizing the communicated nonsecret identifying code to retrieve a stored static value and to obtain a time related value to generate an appropriate nonpredictable code;
the verification computer being operative for performing the second means by utilizing the communicated nonsecret identifying code to retrieve a PIN to generate a second combined coded value.

18. The system as claimed in claim 15, wherein
the device and the verification computer are operative for performing the first and second means;
the device including means for obtaining a stored static value and a time related value;
the device being operative for performing the first means by obtaining the stored static value and the time related value for generating the nonpredictable code;
the device including means for permitting the user to input a PIN into the device;
the device being operative for performing the second means by obtaining the PIN inputted by the user for generating the combined coded value (38) ;
the verification computer being operative for performing the first means by utilizing the communicated nonsecret identifying code to retrieve a stored static value and to obtain a time related value to generate an appropriate nonpredictable code;
the verification computer being operative for performing the second means by utilizing the communicated nonsecret identifying code to retrieve a PIN to generate a second combined coded value.

19. The system as claimed in claim 3 wherein
said device includes means for mixing a time related value, the inputted challenge value and the inputted PIN value to generate a combined coded value (38);
said verification computer includes means for mixing a time related value, the returned challenge value and the retrieved PIN value to generate a second combined coded value;
said verification computer includes an input device and a display; and wherein
said nonsecret identifying code and said combined coded value are communicated to the verification computer by way of the input device; and wherein
said challenge value is communicated to the device by way of the display.

20. The system as claimed in claim 3 wherein
the verification computer comprises a card reader;
the device being adapted to act as a machine readable card; and wherein
the device contains the nonsecret identifying code in machine readable form so that the nonsecret identifying code is communicated to the verification computer by way of the card reader.

21. A method for identifying an individual comprising the steps of:
utilizing a device in the possession of the individual to generate a unique time-varying, nonpredictable code; the user being further provided with a nonsecret identifying code and with a secret PIN; mixing the nonpredictable code generated at a given time with the secret PIN for the individual to generate a combined coded value; communicating the nonsecret identifying code for the individual and
said combined coded value to a central verification computer; and
the verification computer utilizing the nonsecret identifying code to retrieve the PIN and generate an appropriate, unique, time-varying nonpredictable code for the individual, and at least one of:
a) utilizing the retrieved PIN, the appropriate nonpredictable code, and the combined coded value to perform a verification operation; or
b) stripping the PIN from the communicated combined coded value and utilizing the retrieved PIN and nonpredictable code, the stripped PIN and the remaining nonpredictable code to perform a verification operation,
**characterized by** the step of communicating said nonsecret identifying code and the combined coded value separately to said central verification computer, with the nonsecret identifying code being communicated to said verification computer prior to said combined coded value.

## Patentansprüche

1. Personalidentifikationssystem des Typs, bei dem ein Anwender mit einer Vorrichtung (10) versehen ist, die einen einmaligen, über die Zeit variierenden, nicht voraussagbaren Code erzeugt, wobei der Anwender ferner mit einem nicht geheimen Identifikationscode und mit einer geheimen PIN versehen ist, wobei das System umfasst:
ein Mittel (38) zum Mischen des nicht vorhersagbaren Codes, der von der Vorrichtung zu einem gegebenen Zeitpunkt erzeugt wird, mit der PIN gemäß eines vorbestimmten Algorithmus, um einen kombinierten codierten Wert zu erzeugen;
ein Mittel (18, 20) zur Übermittlung des nicht geheimen Identifikationscodes und des kombinierten codierten Wertes an einen zentralen Verifikationscomputer (16); und wobei der zentrale Verifikationscomputer (16) ein Mittel (32) umfasst, um den nicht geheimen Identifikationscode dazu zu verwenden, die PIN wiederzugewinnen, und einen geeigneten einmaligen, über die Zeit variierenden, nicht vorhersagbaren Code für den Anwender zu erzeugen, und zumindest eines aus den folgenden:
(a) ein Mittel zur Verwendung der wiedergewonnenen PIN, des geeigneten nicht vorhersagbaren Codes und des kombinierten codierten Wertes bei der Ausführung eines Verifikationsvorganges; oder
(b) ein Mittel (42) zum Herausziehen der PIN aus dem kombinierten codierten Wert, der von dem Übermittlungsmittel empfangen wird, wobei der nicht vorhersagbare Code nach dem Herausziehen der PIN verbleibt, und ein Mittel (44, 46) zur Verwendung der wiedergewonnenen PIN und des geeigneten nicht vorhersagbaren Codes zur Ausführung eines Verifikationsvorganges,
**dadurch gekennzeichnet, dass** das Übermittlungsmittel (18, 20) derart ausgebildet ist, um den nicht geheimen Identifikationscode und den kombinierten codierten Wert separat an den zentralen Verifikationscomputer zu übermitteln; wobei das Übermittlungsmittel derart ausgebildet ist, um den nicht geheimen Identifikationscode an den Verifikationscomputer vor der Übermittlung des kombinierten codierten Wertes von dem Mischmittel zu dem Verifikationscomputer zu übermitteln.

2. System nach Anspruch 1, wobei der Verifikationscomputer umfasst:
ein Mittel, um den übermittelten nicht geheimen Identifikationscode dazu zu verwenden, die PIN wiederzugewinnen und einen einmaligen Authentisierungswert für den Anwender rückzuführen; und
ein Mittel zur Übermittlung des Authentisierungswertes an die Vorrichtung (10).

3. System nach Anspruch 2, wobei das Mittel zur Übermittlung des Authentisierungswertes ein Mittel (64) zur Übermittlung des Authentisierungswertes an den Anwender umfasst; und
wobei die Vorrichtung (10) ein Mittel (12) umfasst, um dem Anwender zu erlauben, den Authentisierungswert und die PIN in die Vorrichtung einzugeben.

4. System nach Anspruch 3, wobei die Vorrichtung ein Mittel umfasst, das auf den Authentisierungswert anspricht, um den nicht vorhersagbaren Code zu erzeugen; und
wobei das Mischmittel (38) ein Mittel umfasst, das als Teil der Vorrichtung enthalten ist, um die eingegebene PIN und den erzeugten nicht vorhersagbaren Code zu empfangen und einen Ausgang zu erzeugen, der eine vorbestimmte Funktion des Eingangs ist.

5. System nach Anspruch 4, wobei das Mischmittel derart ausgebildet ist, um die PIN zu dem nicht vorhersagbaren Code zu addieren.

6. System nach Anspruch 1, wobei die Vorrichtung ein Mittel (12) umfasst, um dem Anwender zu erlauben, die PIN in die Vorrichtung einzugeben; und
wobei das Mittel (38) zum Mischen als Teil der Vorrichtung enthalten und derart ausgebildet ist, um die PIN, die von dem Anwender eingegeben wird, und den nicht vorhersagbaren Code zu empfangen und einen Ausgang zu erzeugen, der eine vorbestimmte Funktion des Einganges ist.

7. System nach Anspruch 6, wobei das Mischmittel derart ausgebildet ist, um die PIN zu dem nicht vorhersagbaren Code zu addieren.

8. System nach Anspruch 1, wobei der Verifikationscomputer ein Mittel (142) umfasst, um die wiedergewonnene PIN und den geeigneten nicht vorhersagbaren Code, der durch den Verifikationscomputer (16) erzeugt wird, zu einem gegebenen Zeitpunkt gemäß des vorbestimmten Algorithmus zu mischen und einen zweiten kombinierten codierten Wert zu erzeugen.

9. System nach Anspruch 8, wobei der Verifikationsvorgang umfasst, dass der kombinierte codierte Wert mit dem zweiten kombinierten codierten Wert verglichen wird.

10. System nach Anspruch 1, wobei das Mittel zur Ausführung eines Verifikationsvorganges ein Mittel (44, 46) umfasst, um die wiedergewonnene PIN und den geeigneten nicht vorhersagbaren Code, der in Ansprechen auf den nicht geheimen Identifikationscode erhalten wird, mit der herausgezogenen PIN und dem verbleibenden nicht vorhersagbaren Code zu vergleichen.

11. System nach Anspruch 1, wobei das Übermittlungsmittel dazu dient, den nicht geheimen Identifikationscode an den Verifikationscomputer vor der Beendigung der Erzeugung des kombinierten codierten Wertes zu übermitteln.

12. System nach Anspruch 1, wobei das Übermittlungsmittel dazu dient, den nicht geheimen Identifikationscode an den Vertifikationscomputer vor der Anwendereingabe der PIN in die Vorrichtung zu übermitteln.

13. System nach Anspruch 6, wobei die Vorrichtung einen Wert (36) eines nicht vorhersagbaren Codes erzeugt, während der Anwender die PIN in die Vorrichtung (34) eingibt.

14. System nach Anspruch 6, wobei die Vorrichtung die Erzeugung eines Wertes (36) eines nicht vorhersagbaren Codes vor der Beendigung der Zeitperiode einleitet, die erforderlich ist, damit der Anwender die PIN in die Vorrichtung (34) eingeben kann.

15. System nach Anspruch 1, mit:
einem ersten Mittel (36) zur Erzeugung eines nicht vorhersagbaren Codes, wobei ein gespeicherter fester Wert und ein auf Zeit bezogener Wert gemäß eines vorbestimmten ersten Algorithmus (36) (32) gemischt werden;
einem zweiten Mittel (38) zum Mischen des nicht vorhersagbaren Codes, der durch das erste Mittel erzeugt wird, mit einer PIN gemäß eines vorbestimmten zweiten Algorithmus, um den kombinierten codierten Wert (38) (142) zu erzeugen.

16. System nach Anspruch 15, wobei
die Vorrichtung dazu dient, die ersten und zweiten Mittel auszuführen;
die Vorrichtung ein Mittel (12) umfasst, um dem Anwender zu erlauben, eine PIN in die Vorrichtung einzugeben;
die Vorrichtung ein Mittel umfasst, um einen gespeicherten festen Wert und einen auf Zeit bezogenen Wert zu erhalten;
die Vorrichtung dazu dient, das erste Mittel dadurch auszuführen, dass der gespeicherte feste Wert und der auf Zeit bezogene Wert erhalten werden, um den nicht vorhersagbaren Code zu erzeugen;
die Vorrichtung dazu dient, das erste Mittel dadurch auszuführen, dass Werte des nicht vorhersagbaren Codes erzeugt werden, während der Anwender die PIN in die Vorrichtung eingibt;
die Vorrichtung dazu dient, das zweite Mittel dadurch auszuführen, dass die von dem Anwender eingegebene PIN erhalten wird, um den kombinierten codierten Wert (38) zu erzeugen.

17. System nach Anspruch 15, wobei:
der Verifikationscomputer dazu dient, die ersten und zweiten Mittel auszuführen; und wobei
der Verifikationscomputer dazu dient, das erste Mittel dadurch auszuführen, dass der übermittelte nicht geheime Identifikationscode dazu verwendet wird, einen gespeicherten festen Wert wiederzugewinnen und einen auf Zeit bezogenen Wert zu erhalten, um einen geeigneten nicht vorhersagbaren Code zu erzeugen;
der Verifikationscomputer dazu dient, das zweite Mittel dadurch auszuführen, dass der übermittelte nicht geheime Identifikationscode dazu verwendet wird, eine PIN wiederzugewinnen, um einen zweiten kombinierten codierten Wert zu erzeugen.

18. System nach Anspruch 15, wobei:
die Vorrichtung und der Verifikationscomputer dazu dienen, die ersten und zweiten Mittel auszuführen;
die Vorrichtung ein Mittel umfasst, um einen gespeicherten festen Wert und einen auf Zeit bezogenen Wert zu erhalten;
die Vorrichtung dazu dient, das erste Mittel dadurch auszuführen, dass der gespeicherte feste Wert und der auf Zeit bezogene Wert erhalten werden, um den nicht vorhersagbaren Code zu erzeugen;
die Vorrichtung ein Mittel umfasst, um dem Anwender zu erlauben, eine PIN in die Vorrichtung einzugeben;
die Vorrichtung dazu dient, das zweite Mittel dadurch auszuführen, dass die von dem Anwender eingegebene PIN erhalten wird, um den kombinierten codierten Wert (38) zu erzeugen;
der Verifikationscomputer dazu dient, das erste Mittel dadurch auszuführen, dass der übermittelte nicht geheime Identifikationscode dazu verwendet wird, einen gespeicherten festen Wert wiederzugewinnen und einen auf Zeit bezogenen Wert zu erhalten, um einen geeigneten nicht vorhersagbaren Code zu erzeugen;
der Verifikationscomputer dazu dient, das zweite Mittel dadurch auszuführen, dass der übermittelte nicht geheime Identifikationscode dazu verwendet wird, eine PIN wiederzugewinnen, um einen zweiten kombinierten codierten Wert zu erzeugen.

19. System nach Anspruch 3, wobei die Vorrichtung ein Mittel umfasst, um einen auf Zeit bezogenen Wert, den eingegebenen Authentisierungswert und den eingegebenen PIN-Wert zu mischen und damit einen kombinierten codierten Wert (38) zu erzeugen;
der Verifikationscomputer ein Mittel umfasst, um einen auf Zeit bezogenen Wert, den rückgeführten Authentisierungswert und den wiedergewonnenen PIN-Wert zu mischen und damit einen zweiten kombinierten codierten Wert zu erzeugen;
der Verifikationscomputer eine Eingabevorrichtung und ein Display umfasst;
und wobei
der nicht geheime Identifikationscode und der kombinierte codierte Wert über die Eingabevorrichtung an den Verifikationscomputer übermittelt werden; und wobei
der Authentisierungswert über das Display an die Vorrichtung übermittelt wird.

20. System nach Anspruch 3, wobei der Verifikationscomputer einen Kartenleser umfasst;
die Vorrichtung derart ausgebildet ist, um als eine maschinenlesbare Karte zu wirken; und wobei
die Vorrichtung den nicht geheimen Identifikationscode in maschinenlesbarer Form enthält, so dass der nicht geheime Identifikationscode an den Verifikationscomputer über den Kartenleser übermittelt wird.

21. Verfahren zur Identifikation einer Person mit den Schritten, dass:
eine Vorrichtung im Besitz der Person dazu verwendet wird, einen einmaligen, über die Zeit variierenden, nicht vorhersagbaren Code zu erzeugen; wobei der Anwender ferner mit einem nicht geheimen Identifikationscode und mit einer geheimen PIN versehen ist; der nicht vorhersagbare Code, der zu einem gegebenen Zeitpunkt erzeugt wird, mit der geheimen PIN für die Person gemischt wird, um einen kombinierten codierten Wert zu erzeugen;
der nicht geheime Identifikationscode für die Person und der kombinierte codierte Wert an einen zentralen Verifikationscomputer übermittelt werden; und
der Verifikationscomputer den nicht geheimen Identifikationscode dazu verwendet, die PIN wiederzugewinnen und einen geeigneten einmaligen, über die Zeit variierenden, nicht vorhersagbaren Code für die Person zu erzeugen; und zumindest einem der folgenden Schritte, dass:
a) die wiedergewonnene PIN, der geeignete nicht vorhersagbare Code und der kombinierte codierte Wert dazu verwendet werden, einen Verifikationsvorgang auszuführen; oder
b) die PIN von dem übermittelten kombinierten codierten Wert herausgezogen wird und die wiedergewonnene PIN und der nicht vorhersagbare Code, die herausgezogene PIN und der verbleibende nicht vorhersagbare Code dazu verwendet werden, einen Verifikationsvorgang auszuführen,
**gekennzeichnet durch** die Schritte, dass:
der nicht geheime Identifikationscode und der kombinierte codierte Wert separat an den zentralen Verifikationscomputer übermittelt werden, wobei der nicht geheime Identifikationscode an den Verifikationscomputer vor dem kombinierten codierten Wert übermittelt wird.

## Revendications

1. Système d'identification personnel du type dans lequel un utilisateur est muni d'un dispositif (10) générant un code spécifique, variant dans le temps et non prévisible, l'utilisateur étant en outre muni d'un code d'identification non secret et d'un numéro d'identification personnel, ou NIP, secret, le système comprenant :
un moyen (38) pour mélanger le code non prévisible généré par le dispositif à un instant donné avec le NIP conformément à un algorithme prédéterminé, pour générer une valeur codée combinée;
un moyen (18, 20) pour communiquer le code d'identification non secret et la valeur codée combinée à un ordinateur de vérification central (16); et dans lequel l'ordinateur de vérification central (16) comprend un moyen (32) pour utiliser le code d'identification non secret pour obtenir le NIP et pour générer un code spécifique, variant dans le temps, non prévisible, approprié, pour l'utilisateur, et l'un au moins des moyens suivants :
(a) un moyen pour utiliser le NIP obtenu, le code non prévisible approprié et la valeur codée combinée dans l'accomplissement d'une opération de vérification; ou
(b) un moyen (42) pour extraire le NIP de la valeur codée combinée reçue par le moyen de communication, le code non prévisible restant après l'extraction du NIP, et un moyen (44, 46) pour utiliser le NIP obtenu et le code non prévisible approprié pour effectuer une opération de vérification,
**caractérisé en ce que** le moyen de communication (18, 20) est adapté pour communiquer séparément le code d'identification non secret et la valeur codée combinée à l'ordinateur de vérification central ; le moyen de communication étant adapté pour communiquer le code d'identification non secret à l'ordinateur de vérification avant de communiquer à l'ordinateur de vérification la valeur codée combinée provenant du moyen de mélange.

2. Système selon la revendication 1, dans lequel l'ordinateur de vérification comprend un moyen pour utiliser le code d'identification non secret communiqué pour obtenir le NIP et pour retourner une valeur d'interpellation spécifique pour l'utilisateur ; et
un moyen pour communiquer la valeur d'interpellation au dispositif (10).

3. Système selon la revendication 2, dans lequel le moyen de communication de valeur d'interpellation comprend un moyen (64) pour communiquer la valeur d'interpellation à l'utilisateur ; et
dans lequel le dispositif (10) comprend un moyen (12) pour permettre à l'utilisateur d'introduire la valeur d'interpellation et le NIP dans le dispositif.

4. Système selon la revendication 3, dans lequel le dispositif comprend un moyen réagissant à la valeur d'interpellation en générant le code non prévisible; et dans lequel le moyen de mélange (38) comprend un moyen, inclus sous la forme d'une partie du dispositif, pour recevoir le NIP introduit et le code non prévisible généré, et pour générer une information de sortie qui est une fonction prédéterminée de l'information d'entrée.

5. Système selon la revendication 4, dans lequel le moyen de mélange est adapté pour additionner le NIP au code non prévisible.

6. Système selon la revendication 1, dans lequel le dispositif comprend un moyen (12) pour permettre à l'utilisateur d'introduire le NIP dans le dispositif; et dans lequel le moyen de mélange (38) est inclus sous la forme d'une partie du dispositif et est adapté pour recevoir le NIP introduit par l'utilisateur et le code non prévisible et pour générer une information de sortie qui est une fonction prédéterminée de l'information d'entrée.

7. Système selon la revendication 6, dans lequel le moyen de mélange est adapté pour additionner le NIP au code non prévisible.

8. Système selon la revendication 1, dans lequel l'ordinateur de vérification comprend un moyen (142) pour mélanger le NIP obtenu et le code non prévisible approprié généré par l'ordinateur de vérification (16) à un instant donné, conformément à l'algorithme prédéterminé, pour générer une seconde valeur codée combinée.

9. Système selon la revendication 8, dans lequel l'opération de vérification comprend la comparaison de la valeur codée combinée avec la seconde valeur codée combinée.

10. Système selon la revendication 1, dans lequel le moyen pour effectuer une opération de vérification comprend un moyen (44, 46) pour comparer le NIP obtenu et le code non prévisible approprié obtenu en réponse au code d'identification non secret, avec le NIP extrait et le code non prévisible restant.

11. Système selon la revendication 1, dans lequel le moyen de communication communique le code d'identification non secret à l'ordinateur de vérification avant l'achèvement de la génération de la valeur codée combinée.

12. Système selon la revendication 1, dans lequel le moyen de communication communique le code d'identification non secret à l'ordinateur de vérification avant que l'utilisateur introduise le NIP dans le dispositif.

13. Système selon la revendication 6, dans lequel le dispositif génère une valeur de code non prévisible (36) pendant que l'utilisateur introduit le NIP dans le dispositif (34).

14. Système selon la revendication 6, dans lequel le dispositif commence la génération d'une valeur de code non prévisible (36) avant l'achèvement de la durée exigée pour que l'utilisateur introduise le NIP dans le dispositif (34).

15. Système selon la revendication 1, comprenant :
un premier moyen (36) pour générer un code non prévisible, dans lequel une valeur statique stockée et une valeur liée au temps sont mélangées conformément à un premier algorithme (36) (32):
un second moyen (38) pour mélanger le code non prévisible généré par le premier moyen avec un NIP, conformément à un second algorithme prédéterminé, pour générer la valeur codée combinée (38) (142).

16. Système selon la revendication 15, dans lequel le dispositif fonctionne de façon à remplir les fonctions des premier et second moyens;
le dispositif comprend un moyen (12) pour permettre à l'utilisateur d'introduire un NIP dans le dispositif; le dispositif comprend un moyen pour obtenir une valeur statique stockée et une valeur liée au temps;
le dispositif fonctionne de façon à remplir la fonction du premier moyen en obtenant la valeur statique stockée et la valeur liée au temps pour générer le code non prévisible;
le dispositif fonctionne de façon à remplir la fonction du premier moyen en générant des valeurs de code non prévisibles pendant que l'utilisateur introduit le NIP dans le dispositif;
le dispositif fonctionne de façon à remplir la fonction du second moyen en obtenant le NIP introduit par l'utilisateur pour générer la valeur codée combinée (38).

17. Système selon la revendication 15, dans lequel l'ordinateur de vérification fonctionne de façon à remplir les fonctions des premier et second moyens;
et dans lequel
l'ordinateur de vérification fonctionne de façon à remplir la fonction du premier moyen en utilisant le code d'identification non secret communiqué, pour obtenir une valeur statique stockée et pour obtenir une valeur liée au temps, pour générer un code non prévisible approprié; l'ordinateur de vérification fonctionne de façon à remplir la fonction du second moyen en utilisant le code d'identification non secret communiqué, pour obtenir un NIP pour générer une seconde valeur codée combinée.

18. Système selon la revendication 15, dans lequel
le dispositif et l'ordinateur de vérification fonctionnent de façon à remplir les fonctions des premier et second moyens;
le dispositif comprend un moyen pour obtenir une valeur statique stockée et une valeur liée au temps;
le dispositif fonctionne de façon à remplir la fonction du premier moyen en obtenant la valeur statique stockée et la valeur liée au temps pour générer le code non prévisible;
le dispositif comprend un moyen pour permettre à l'utilisateur d'introduire un NIP dans le dispositif;
le dispositif fonctionne de façon à remplir la fonction du second moyen en obtenant le NIP introduit par l'utilisateur, pour générer la valeur codée combinée (38); l'ordinateur de vérification fonctionne de façon à remplir la fonction du premier moyen en utilisant le code d'identification non secret communiqué pour obtenir une valeur statique stockée et pour obtenir une valeur liée au temps, pour générer un code non prévisible approprié;
l'ordinateur de vérification fonctionne de façon à remplir la fonction du second moyen en utilisant le code d'identification non secret communiqué pour obtenir un NIP, pour générer une seconde valeur codée combinée.

19. Système selon la revendication 3, dans lequel
le dispositif comprend un moyen pour mélanger une valeur liée au temps, la valeur d'interpellation introduite et la valeur de NIP introduite, pour générer une valeur codée combinée (38);
l'ordinateur de vérification comprend un moyen pour mélanger une valeur liée au temps, la valeur d'interpellation retournée et la valeur de NIP obtenue, pour générer une seconde valeur codée combinée;
l'ordinateur de vérification comprend un dispositif d'entrée et un dispositif de visualisation; et dans lequel le code d'identification non secret et la valeur codée combinée sont communiqués à l'ordinateur de vérification au moyen du dispositif d'entrée; et dans lequel
la valeur d'interpellation est communiquée au dispositif au moyen du dispositif de visualisation.

20. Système selon la revendication 3, dans lequel l'ordinateur de vérification comprend un lecteur de carte;
le dispositif est adapté de façon à fonctionner comme une carte lisible par une machine; et dans lequel
le dispositif contient le code d'identification non secret sous une forme lisible par une machine, de façon que le code d'identification non secret soit communiqué à l'ordinateur de vérification au moyen du lecteur de carte.

21. Procédé pour identifier une personne, comprenant les étapes suivantes :
on utilise un dispositif en la possession de la personne pour générer un code spécifique variant dans le temps, non prévisible; l'utilisateur étant en outre muni d'un code d'identification non secret et d'un NIP secret ;
on mélange le code non prévisible généré à un instant donné avec le NIP secret pour la personne, pour générer une valeur codée combinée;
on communique à un ordinateur de vérification central le code d'identification non secret pour la personne et la valeur codée combinée; et
l'ordinateur de vérification utilise le code d'identification non secret pour obtenir le NIP et générer un code spécifique, variant dans le temps, non prévisible, approprié, pour la personne, et il accomplit l'une au moins des actions suivantes :
(a) il utilise le NIP obtenu, le code non prévisible approprié et la valeur codée combinée pour effectuer une opération de vérification; ou
(b) il extrait le NIP de la valeur codée combinée communiquée et il utilise le NIP obtenu et le code non prévisible, le NIP extrait et le code non prévisible restant, pour effectuer une opération de vérification,
**caractérisé par** l'étape consistant à communiquer séparément à l'ordinateur de vérification central le code d'identification non secret et la valeur codée combinée, le code d'identification non secret étant communiqué à l'ordinateur de vérification avant la valeur codée combinée.
